# EUROPÄISCHE PATENTSCHRIFT

(11) **EP 1 378 305 B1**
(45) Veröffentlichungstag und Bekanntmachung des Hinweises auf die Patenterteilung: **24.11.2004**
(21) Anmeldenummer: 03450153.6
(22) Anmeldetag: 23.06.2003
(51) Int. Cl.: B23C 3/28

(54) **Werkzeug und schneidplatten zum wirbelfräsen**
Tool and cutting insert for circular milling
Outil et plaquette de couple pour fraisage circulaire

(30) Priorität: 05.07.2002 AT 10172002
(43) Veröffentlichungstag der Anmeldung: 07.01.2004
(73) Patentinhaber: Böhlerit Ges.m.b.H. & Co KG, 8605 Kapfenberg (AT); WEINGARTNER MASCHINENBAU GESELLSCHAFT m.b.H., A-4656 Kirchham 26 (AT)
(72) Erfinder: Steininger, Gerald, 4840 Vöcklabruck (AT); Winter, Johann, 4560 Kirchdorf/Krems (AT)
(74) Vertreter: Wildhack, Helmut, Dipl.-Ing. Dr.

(56) Entgegenhaltungen:
- DE-C- 689 016
- GB-A- 1 569 266
- US-A- 1 729 050
- US-A- 2 608 225
- US-A- 5 676 505
- US-B1- 6 306 017

## Beschreibung

Die Erfindung bezieht sich auf ein Werkzeug gemäß dem Oberbegriff des Anspruchs 1 und auf einer Schneidplatte gemäß dem Oberbegriff des Anspruchs 7. Ein solches Werkzeug ist aus US-A-6 306 017 bekannt, und eine solche Schneidplatte ist aus US-A-5 676 505 bekannt.

In der modernen Maschinentechnik werden zunehmend zylindrisch runde und/oder kegelige Werkstücke mit profilierter Oberfläche, insbesondere mit schraubenförmigen Vertiefungen in der Außen- oder Innenzone der Teile verwendet. Ein Wirbelfräsen als schnellste und wirtschaftlichste Art der spanenden Bearbeitung für eine Erstellung von derartigen Profilen in Werkstücken wird beispielsweise für eine Herstellung von ein und mehrgängigen Schnecken, Kompressor-Rotoren, Gewindespindeln, Pumpenelemente und dergleichen eingesetzt, wobei, wie in der US-6306017 B1 offenbart, nach einem Wirbelfräsen des Werkstückes ein Wirbelschleifen zur Verbesserung der Oberflächengüte desselben erfolgen kann.

Obwohl durch ein Wirbelfräsen eine spanabhebende Bearbeitung wesentlich verkürzt werden kann, wird die vermeintlich geringe Haltbarkeit der Werkzeuge vielfach als Nachteil empfunden.

Hohe Härte, große Zähigkeit und eine schlechte Bearbeitbarkeit der Werkstoffe, aus welchen im steigenden Maße schraubenförmig profilierte Maschinenbauteile gefertigt sind, zum Beispiel korrosionsbeständige Komponenten aus Cr-Ni-Mo-Stählen und Titan in Erdöl- und Chemie-Anlagen, erbringen oft eine niederige Standzeit der Werkzeugschneiden und/oder geringe Abtragleistungen bei einer Bearbeitung durch Wirbeln.

Die Erfindung bezweckt die Vermeidung der Nachteile des Standes der Technik und zielt darauf ab, ein Werkzeug der eingangs genannten Art zu schaffen, welches wirtschaftliche Vorteile beim Bearbeiten von Werkstücken durch Wirbelfräsen bringt, einfach aufgebaut ist und eine hohe Abspanleistung bzw. eine hohe Standzeit der Schneide bei großer Bearbeitungsgenauigkeit der Werkstücke erreichen lässt und eine stabile Schneidplattenverankerung im Trägerteil sowie eine vibrationsarme Halterung aufweist.

Weiters ist es Aufgabe der Erfindung, eine Schneidplatte zum Einbau in Einspannteilen oder Schneidelementen von Werkzeugen zur gattungsgemäßen Bearbeitung von Werkstücken anzugeben, welche Schneideplatte stabil verankerbar ist, hohe Abspanleistungen ermöglicht und hohe Wirtschaftlichkeit besitzt.

Das genannte Ziel wird bei einem gattungsgemäßen Werkzeug dadurch erreicht, dass die Schneidelemente mit einem Ausmaß von minderstens 1,2mal, höchstens jedoch von 3,4mal, der Tiefe der zu erstellenden Nut über den Einspannteil frei vorragend gebildet sind, im äußeren distalen Arbeitsbereich eine größere Breitenerstreckung als im proximalen einspannahen Bereich aufweisen und dass an der (den) stirnseitigen und an der (den) Seitenschneidkante(n) der Schneidelemente der Freiwinkel zwischen 3° und 12° beträgt.

Die mit der Erfindung erreichten Vorteile sind im Wesentlichen darin zu sehen, dass Virbrationen des Trägerteiles und in der Folge der Schneidkanten bei einer Spanabnahme von Werkstücken, insbesondere aus schwer bearbeitbaren Werkstoffen, unterdrückt werden, wodurch eine Ausbildung von sogenannten Rattermarken an der Bearbeitungsoberfläche weitgehend unterbleibt.

Erfindungsgemäß kann somit eine größere Breitenerstreckung der Schneidelemente im äußeren distalen Arbeitsbereich vorgesehen werden, was auch bei einer Erstellung von komplizierten Bearbeitungsprofilen förderlich ist. Dabei ist es günstig, wenn an den Schneidkanten der Freiwinkel zwischen 3° und 12° beträgt. Überraschenderweise entstehen auch bei einer derartig tiefen Positionierung der Schneidelemente im Einspannteil keine Probleme mit einem Spanaustrag.

Eine besonders günstige Form des Bearbeitungswerkzeuges kann erreicht werden, wenn die mit dem Einspannteil lösbar verbindbaren Schneidelemente aus einem Trägerteil mit mindestens einer auf diesem befestigten, mindestens eine Schneidkante aufweisenden Schneidplatte gebildet sind. Eine vermehrte Lagerhaltung im Hinblick auf ein Auftreten von Schneidkantenverschleiß am Werkzeug beschränkt sich somit auf gleich geformte Schneidplatten.

Eine universelle Einsetzbarkeit des Werkzeuges kann dadurch erreicht werden, dass in den Schneidelementen im distalen Stirn- und einem dergleichen Flankenbereich am Trägerteil eine oder mehr als eine Hauptschneidplatte angeordnet ist (sind) und dass gegebenenfalls einer Hauptflankenschneidplatte proximal gegenüberliegend eine Hilfs- oder Nebenschneidplatte positioniert ist. Erfindungsgemäß kann durch diese Ausgestaltung der Flugkreis des für eine Nuterstellung vorgesehenen Werkzeuges bzw. Trägerteiles einen hohen Schneidkantenanteil aufweisen, was die Wirtschaftlichkeit der Bearbeitung fördert.

Eine besonders vorteilhafte Weiterbildung der Erfindung wird erreicht, wenn die Schneidelemente zumindest je eine Schneidplatte, welche durch mindestens ein Befestigungselement mit einer Wirkrichtung, im Wesentlichen senkrecht oder unter einem Winkel von 72° bis 89° geneigt auf die Freifläche, das ist die Seitenfläche der Schneidplatte mit dem Trägerteil verbunden ist, aufweisen.

Diese Befestigungsart der Schneidplatten verbessert und stabilisiert nicht nur die Verbindung mit dem Trägerteil, sondern es steht auch eine ungebohrte Auflagefläche für die Übertragung des Hauptteiles der Schnittkräfte zur Verfügung. Eine Einstellung der Wirkrichtung des Befestigungselementes kann dabei den Belastungen, die auf die Schneidplatte bei der Abspanung, zum Beispiel bei einem unterbrochenen Schnitt mit hohem Spanquerschnitt wirksam sind, Rechnung tragen.

Im Hinblick auf die Ausführungsform der Schneidplatten als verteilhafte Wendeschneidplatten hat es sich als günstig erwiesen, wenn die Schneidkanten von im drehbaren Einspannteil in Drehrichtung aufeinander folgenden Schneidelementen zusammenwirkend für eine Nuterstellung im Werkstück ausgebildet sind, vorzugsweise zwei unmittelbar aufeinander folgend eingespannte Trägerteile einen radial spiegelbildlichen Besatz mit gleich geformten Schneidplatten aufweisen und der Flugkreis der Schneidkanten im Wesentlichen die Bearbeitungskontur bildet.

Als besonders wirkungsvoll für höchste Abspanleistungen vom Werkstück bei gesteigerter Standzeit des Werkzeuges hat sich herausgestellt, wenn erfindungsgemäß zumindest eine der Schneidplatten an oder im Bereich der Schneidkante(n) eine teilweise konkave Oberflächenform der Spanfläche oder zumindest teilweise eine Spanleitstufe besitzt (besitzen). Beim Einsatz von Schneidplatten mit einer Spanleitstufe wurde von der Fachwelt eine ungebrochene spiralige Spanausbildung angenommen, welche spiraligen Späne bei einem Wirbelfräsen im Bereich der vorragenden Schneidelemente in den Zwischenräumen verbleiben können und gegebenenfalls eine Unterbrechung des Bearbeitungsvorganges begründen. Dieser Fachmeinung entgegengerichtet wurden keine derartigen Probleme festgestellt.

Die weitere Aufgabe der Erfindung wird bei einer Schneidplatte der eingangs genannten Art für eine Bearbeitung von Werkstücken durch Wirbelfräsen dadurch gelöst, dass die Schneidplatte als Wendeschneidplatte zum Einsatz in aufeinander folgenden Einspannteilen oder Schneidelementen ausgeformt ist und in einer achsnormalen Draufsicht jeweils in einem Winkel α zueinander ausgerichtete Anlageflächen sowie eine, eine gegebenenfalls gekrümmte Schneidkante bildende Spanfläche aufweist und zumindest in einer Seitenansicht die Freifläche eine Trapezform mit zueinander geneigten Schneidkanten besitzt.

Die mit der Erfindung erzielten Vorteilen, die insbesondere auf eine Bearbeitung durch Wirbelfräsen gerichtet sind, bestehen im Wesentlichen darin, dass Komponenten der Schneidekräfte die auf die Schneidplatte wirken, eine Stabilisierung der Position derselben in der Halterung fördern. Mit anderen Worten, die Schneidplatte wird vom Schneidedruck in die keilförmig angeordenten Passoder Anlageflächen gedrückt, wobei ein Befestigungselement der Platte keine zusätzliche Beanspruchung erfährt. Eine derart Selbstzentrierung der Schneidplatte hat, wie überraschend gefunden wurde, auch eine Verbesserung der Werkstückoberfläche und eine Erhöhung der Bearbeitungsgenauigkeit bzw. eine Verringerung des erforderlichen Toleranzmaßes des Werkstückes als Vorteil.

Besonders vorteilhaft ist dabei, wenn erfindungsgemäß eine Ausnehmung für eine Befestigung der Schneidplatte im Wesentlichen senkrecht zu einer Freifläche diese durchdringt, vorzugsweise winkelhalbierend zu den Spanflächen gerichtet ist.

Durch diese Ausführungsform weist die Spanfläche keinerlei der Befestigung der Schneidplatte dienenden Bereiche auf, die eine vorgesehene Spanführung beeinflussen und das Befestigungselement insbesondere abrasiv beanspruchen würden. Vielmehr kann die Schneidplatte mittels eines Befestigungselementes weitgehend beanspruchungsgemäß in einem Trägerteil kraftschlüssig positioniert werden.

Vollkommen überraschend für eine Schneidplatte in Werkzeugen zur Bearbeitung von Werkstücken mittels Wirbelfräsens wurde gefunden, dass die Spanfläche im Bereich der Schneidkante im Wesentlichen schneidkantenparallel oder äquidistant zumindest teilweise eine Vertiefung oder dergleichen in einer Form einer Spanleitstufe aufweist. Durch diese erfindungsgemäße Ausgestaltung einer Schneidplatte kann ohne die vom Fachmann befürchtete Spankonzentration im Bearbeitungsbereich eine Leistungssteigerung bei der Wirbelfräsbearbeitung erreicht werden.

Ein Ausführungsbeispiel der Erfindung, welches ledigleich einen Ausführungsweg derselben darstellt, wird anhand der Zeichnungen näher erläutert.

Es zeigt
Fig. 1 eine Ansicht eines Schneidelementes
Fig. 2 eine Draufsicht auf das Schneidelement
Fig. 3 eine Draufsicht auf eine erfingungsgemäße Schneidplatte
Fig. 4 eine Ansicht der Platte von Fig. 3
Fig. 5 eine Ansicht der Platte von Fig. 5 in Richtung der Befestigung

### Bezugszeichenliste:

- A: Ausmaß des Vorragens der Schneidelementes
- E: Einspannteil
- B₁: Breitenerstreckung im distalen Arbeitsbereich des Schneidelementes
- B₂: Breitenerstreckung im proximalen Bereich des Schneidelementes
- 1: Schneidelement
- 2: Trägerteil
- 3,30,32: Schneidplatten
- 31,31',301,321: Schneidkanten
- 33,33': Anlageflächen
- 34,34': Spanflächen
- 35,305: Freiflächen
- 36,36': Spanleitstufen
- 4,40: Ausnehmung für eine Befestigung in der Schneidplatte

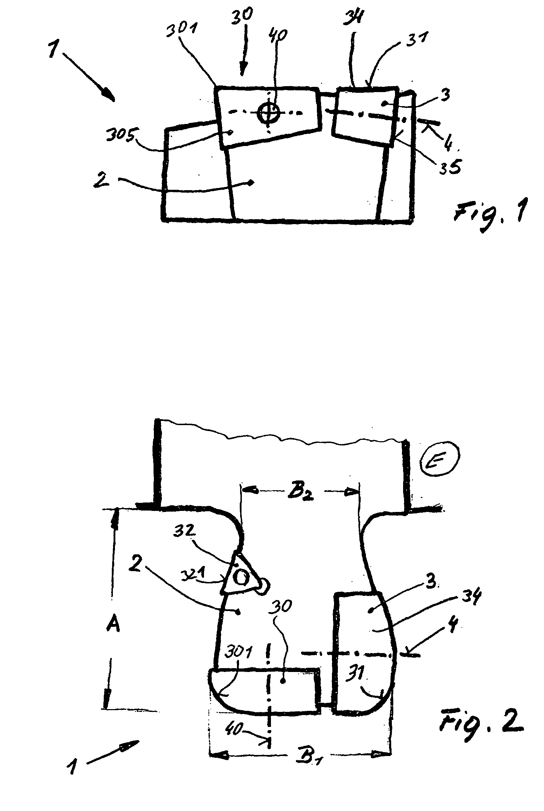

Fig. 1 zeigt in schematischer Darstellung eine Ansicht eines Schneidelementes 1 in Richtung zum Einspannteil. Ein Schneidelement 1 wird dabei im Arbeitsbereich A durch ein Trägerteil 2 gebildet, welches mit Schneidplatten 3,30 verbunden ist. Eine Verbindung derselben mit dem Trägerteil 2 erfolgt mittels Befestigungselementen, zum Beispiel Spannschrauben, welche jeweils eine Ausnehmung 4,40, die im Wesentlichen senkrecht auf die Freiflächen 35,305 der Schneidplatten 3,30 gerichtet ist, durchdringen. Die Schneidkanten 31,301 der Schneidplatten 3,31 sind gegenüber dem Trägerteil 2 im Arbeitseinsatz des Schneidelementes vorversetzt.

Ein Schneidelement 1 gemäß Fig. 1 zeigt in Draufsicht Fig. 2. Ein im Einspannteil E befestigtes Schneidelement 1 ragt um ein Ausmaß A zur Fertigung einer Nut in einem Werkstück vor und besitzt in einem distalen Arbeitsbereich eine größere Breite B₁ als in einem proximalen Einspannbereich B₂. Eine Hauptflankenplatte 3 und eine Grundplatte 30 sind im distalen Bereich eines Trägerteiles 2 eines Schneidelementes 1 positioniert; eine Nebenschneidplatte 32 befindet sich schräg gegenüber der Hauptflankenplatte 3 im der Einspannung E näheren, eine geringere Breite B, aufweisenden Trägerteil 2.

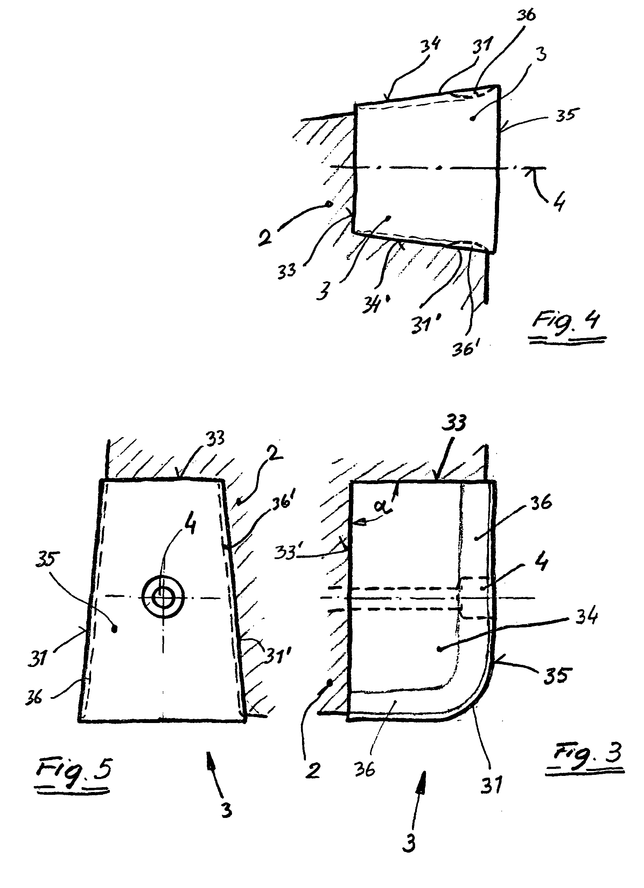

Fig. 3, Fig. 4, Fig. 5 zeigen eine Draufsicht, sowie in zwei um 90° versetzten Ansichten eine erfindungsgemäße Schneidplatte in Form einer Wendeschneidplatte 3 mit radiengeometrisch zusammengesetzten Schneidkanten 31,31'. Zum Trägerteil 2 hin, also von den Schneidkanten 31,31' weg, verringert sich jeweils die Dicke der Wendeschneidplatte 3, sodass in den Ansichten (Fig. 4, Fig. 5) diese eine Trapezform aufweist. Im Trägerteil 2 festgelegt ist die Wendeschneidplatte 3 durch ein Befestigungselement, welches in einer Ausnehmung 4 derselben im Wesentlichen senkrecht auf eine Freifläche 35 angeordent ist und eine Druckspannung aufbringt. Eine Belastung einer Schneidplatte 3 beim Wirbelfräsen erfolgt in einem der Schneidkante 31 nahen Bereich, wobei die Schnittkräfte von den Anlageflächen 33,33' und der Auflagefläche 34' aufgenommen werden und auf Grund der geometrischen Form der Schneidplatte 3 diese im Trägerteil 2 zusätzlich zum Spannelement stabilisiert.

Im Wesentlichen schneidkantenparallel oder äquidistant zur Schneidkante 31,31' kann in die Spanfläche 34,34' der Wendeschneidplatte 3 eine Vertiefung 36,36' eingebracht sein, die jeweils als Spanleitstufe wirksam ist.

## Patentansprüche

1. Werkzeug für Einrichtungen oder Maschinen zur zumindest teilweisen Bearbeitung einer zylindrischen und/oder einer kegelförmigen Außenzone eines drehbaren Werkstückes in dessen Längsrichtung unter Ausbildung einer oder mehrerer schneckenförmigen oder spiraligen Nut(en) oder von Gewindegängen und dergleichen durch Wirbelfräsen, umfassend einen das Werkstück ringförmig umgebenden, drehend antreibbar, in Richtung der Längsachse desselben verschiebbar und zu dieser radial verstellbar bzw. anstellbar, ausgebildeten Aufspannteil und daran befestigte, zur Werkstückachse gerichtete Schneidelemente mit Schneidkanten, **dadurch gekennzeichnet, dass** die Schneidelemente (1) mit einem Ausmaß (A) von mindestens 1,2mal, höchstens jedoch von 3,4mal, der Tiefe der zu erstellenden Nut über den Einspannteil (E) frei vorragend gebildet sind, im äußeren distalen Arbeitsbereich eine größerer Breitenerstreckung (B₁) als im proximalen einspannahen Bereich ( B₂) aufweisen und dass an der (den) stirnseitigen und an der (den) Seitenschneidkante(n) der Schneidelemente (1) der Freiwinkel zwischen 3° und 12° beträgt.

2. Werkzeug nach Anspruch 1, **dadurch gekennzeichnet, dass** die mit dem Einspannteil (E) lösbar verbindbaren Schneidelemente (1) aus einem Trägerteil (2) mit mindestens einer auf diesem befestigten, mindestens eine Schneidkante (31,301) aufweisenden Schneidplatte (3, 30) gebildet sind.

3. Werkzeug nach Anspruch 1 oder 2, **dadurch gekennzeichnet, dass** in den Schneidelementen (1) im distalen Stirn- und einem dergleichen Flankenbereich am Trägerteil (2) eine oder mehr als eine Hauptschneidplatte (3,30) angeordnet ist (sind) und dass gegebenenfalls einer Hauptflankenschneidplatte (3) proximal gegenüberliegend eine Hilfs- oder Nebenschneidplatte (32) positioniert ist.

4. Werkzeug nach einem der Ansprüche 1 bis 3, **dadurch gekennzeichnet, dass** die Schneidelemente (1) zumindest eine Schneidplatte (3,30), welche durch mindestens ein Befestigungselement (4,40) mit einer Wirkrichtung im Wesentlichen senkrecht oder unter einem Winkel von 72 bis 89° geneigt auf die Freifläche (35,305), das ist die Seitenfläche der Schneidplatte (3,30) mit dem Trägerteil (2) verbunden ist, aufweisen.

5. Werkzeug nach einem der Ansprüche 1 bis 4, **dadurch gekennzeichnet, dass** die Schneidkanten (31,301) von im drehbaren Einspannteil (E) in Drehrichtung aufeinander folgenden Schneidelementen (1) zusammenwirkend für eine Nuterstellung im Werkstück ausgebildet sind, vorzugsweise zwei unmittelbar aufeinander folgend eingespannte Trägerteile (2) einen radial spiegelbildlichen Besatz mit gleich geformten Schneidplatten (3,30,32) aufweisen und der Flugkreis der Schneidkanten (31,301,321) im Wesentlichen die Bearbeitungskontur bildet.

6. Werkzeug nach einem der Ansprüche1 bis 5, **dadurch gekennzeichnet, dass** zumindest eine der Schneidplatten (3,30,32) an oder im Bereich der Schneidkante(n) (31,301,321) eine teilweise konkave Oberflächenform der Spanfläche (34) oder zumindest teilweise eine Spanleitstufe besitzt (besitzen).

7. Schneidplatte zum Einbau in Einspannteilen oder Schneidelementen von Werkzeugen zur Bearbeitung von Werkstücken durch Wirbelfräsen, wobei die Schneidplatte (3) vorragend in einer Ausnehmung eines Trägerteiles (2) lösbar festgelegt ist und mindestens zwei Pass- oder Anlageflächen (33,33'), eine im Wesentlichen die Schnittkräfte übertragende Auflagefläche (34') sowie die Schneidkante(n) (31) bildende Freifläche(n) (35) und Spanfläche (34) aufweist, **dadurch gekennzeichnet, dass** die Schneidplatte (3) als Wendeschneidplatte zum Einsatz in aufeinander folgenden Einspannteilen oder Schneidelementen ausgeformt ist und in einer achsnormalen Draufsicht jeweils in einem Winkel α zueinander ausgerichtete Anlageflächen (33,33') sowie eine, eine gegebenenfalls gekrümmte Schneidkante (31) bildende Spanfläche (34) aufweist und zumindest in einer Seitenansicht die Freifläche eine Trapezform mit zueinander geneigten Schneidkanten (31,31') besitzt.

8. Schneidplatte nach Anspruch 7, **dadurch gekennzeichnet, dass** eine Ausnehmung (4) für eine Befestigung der Schneidplatte (3) im Wesentlichen senkrecht zu einer Freifläche (35) diese durchdringt, vorzugsweise winkelhalbierend zu den Spanflächen (34,34') gerichtet ist.

9. Schneidplatte nach Anspruch 7 oder 8, **dadurch gekennzeichnet, dass** die Spanfläche (34) im Bereich der Schneidkante (31) im Wesentlichen schneidkantenparallel oder äquidistant zumindest teilweise eine Vertiefung (36) in einer Form einer Spanleitstufe (36) aufweist.

## Claims

1. Tool for devices or machines for the at least partial machining of a cylindrical and/or a conical outer zone of a rotatable work piece in its longitudinal direction with one or more spiral grooves, threads or the like being shaped by circular milling, comprising a rotatingly driven positioning part annularly surrounding the work piece, being movable along its longitudinal axis and being radially adjustable to this axis and attached thereto cutting elements with cutting edges the cutting elements being aligned towards the axis of the workpiece, **characterized in that** the cutting elements (1) are shaped with a dimension (A) of at least 1,2 times, at most 3,4 times, of the depth of the groove to be formed extending freely over the positioning part (E), that said cutting elements (1) have in the outer distal working area a larger width (B1) than in the proximal area (B2) close to the positioning device and that on the front and the side cutting edge(s) of the cutting tools (1) the free angle is between 3° and 12°.

2. Tool, according to claim 1, **characterized in that** the cutting elements (1) detachably connectable to the positioning part (E) are formed of a carrier (2) with at least one cutting plate (3,30) being attached thereto with a cutting egde (31,301).

3. Tool, according to claim 1 or 2, **characterized in that** in the cutting elements (1) in the distal front area and in a corresponding side area on the carrier (2) one or more main cutting plate(s) (3,30) is (are) provided and that if necessary an additional cutting plate (32) proximal to the main cutting plate (3) is provided.

4. Tool, according to one of the claims 1 to 3, **characterized in that** the cutting elements (1) have at least one cutting plate (3,30) that is connected via a fastening element (4,40) with the carrier (2) with an effective direction substantially vertical or inclined at an angle of 72° to 89° to the free area (35,305), that is the side area of the cutting plate (3,30).

5. Tool, according to one of the claims 1 to 4, **characterized in that** the cutting edges (31,301) are formed in a cooperating way for a formation of the groove in the work piece by cutting elements (1) being arranged in the sense of rotation one after the other in the rotatable positioning device (E), especially two carriers (2) mounted directly one after the other, having a radial, mirror-inverted border with equally shaped cutting plates (3,30,32) and that the circle of the cutting edges (31,301,321) forms the substantial working shape.

6. Tool, according to one of the claims 1 to 5, **characterized in that** at least one of the cutting plates (3, 30, 32) has a partly concave outer shape of the surface (34) or at least partly a chip guiding shoulder on or near the cutting edge(s) (31, 301, 321).

7. Cutting plate for the application in positioning parts or cutting elements of tools for the machining of work pieces by circular milling, with a cutting plate (3) being detachably fixed in a protruding way in a recess of a carrier (2) and having at least two bearing surfaces (33,33'), one positioning surface (34') substantially transferring the cutting forces and free surfaces (35) and a surface (34) forming the cutting edge(s) (31), **characterized in that** the cutting plate (3) is formed as an indexable insert plate for the use in positioning parts or cutting elements following each other having bearing surfaces (33,33') being aligned to each other at an angle α in a view square to the axis and a surface (34) forming if necessary a curved cutting edge (31) and that the free surface has at least in one side view a trapezoidal shape with cutting edges (31,31') inclined towards each other.

8. Cutting plate according to claim 7, **characterized in that** a recess (4) for fixating the cutting plate (3) is aligned substantially vertically to a free surface (35) penetrating the same, especially bisecting the angle between the surfaces (34,34').

9. Cutting plate according to claim 7 or 8, **characterized in that** the surface (34) has at least partially a groove (36) in the form of a chip guiding shoulder (36) near the cutting edge (31) substantially parallel or equidistant to the cutting edge

## Revendications

1. Outil pour dispositifs ou machines destinés à l'usinage au moins partiel d'une zone externe cylindrique et/ou conique d'une pièce à usiner mobile en rotation dans sa direction longitudinale avec formation d'une ou plusieurs rainures hélicoïdales ou spiroïdales ou de pas de vis et similaires par fraisage circulaire, comprenant une pièce de serrage entourant la pièce à usiner de manière annulaire, pouvant être entraînée en rotation, mobile en translation dans la direction de l'axe longitudinal de ladite pièce à usiner et apte à être déplacée ou approchée radialement par rapport à elle, ainsi que des éléments de coupe à arêtes de coupe fixés sur ladite pièce de serrage et orientés en direction de l'axe de la pièce à usiner, **caractérisé en ce que** les éléments de coupe (1) sont conçus avec une dimension (A) d'au moins 1,2 fois, mais au plus 3,4 fois la profondeur de la rainure à réaliser, en débordement libre de la pièce de serrage (E), et présentent dans la zone de travail extérieure distale une plus grande largeur (B₁) que dans la zone proximale proche du montage (B₂) et **en ce que** l'angle de dépouille au niveau de la ou des arête(s) de coupe frontale(s) et de la ou des arête(s) de coupe latérale(s) des éléments de coupe (1) est compris entre 3° et 12°.

2. Outil selon la revendication 1, **caractérisé en ce que** les éléments de coupe (1) pouvant être reliés de manière amovible à la pièce de serrage (E) sont formés d'un corps d'outil (2) comportant au moins une plaquette de coupe (3, 30) qui est fixée sur celui-ci et qui présente au moins une arête de coupe (31, 301).

3. Outil selon la revendication 1 ou la revendication 2, **caractérisé en ce qu'**une ou plusieurs plaquettes de coupe principales (3, 30) est/sont agencée(s) dans les éléments de coupe (1) au niveau de la zone distale frontale et d'une zone distale latérale du corps d'outil (2), et **en ce qu'**une plaquette de coupe auxiliaire ou supplémentaire (32) est éventuellement positionnée dans la région proximale située à l'opposé d'une plaquette de coupe principale latérale (3).

4. Outil selon l'une des revendications 1 à 3, **caractérisé en ce que** les éléments de coupe (1) présentent au moins une plaquette de coupe (3, 30) qui est assemblée avec le corps d'outil (2) au moyen d'au moins un élément de fixation (4, 40) ayant une direction d'action sensiblement perpendiculaire à la face de dépouille (35, 305), c'est-à-dire la face latérale de la plaquette de coupe (3, 30), ou inclinée par rapport à ladite face de dépouille selon un angle de 72 à 89°.

5. Outil selon l'une des revendications 1 à 4, **caractérisé en ce que** les arêtes de coupe (31, 301) d'éléments de coupe (1) se succédant dans le sens de rotation dans la pièce de serrage mobile en rotation (E) sont conformées pour coopérer à la réalisation d'une rainure dans la pièce à usiner, **en ce que** deux corps d'outil (2) montés directement l'un après l'autre sont munis de préférence de plaquettes de coupe de formes identiques (3, 30, 32) agencées symétriquement par rapport à un axe radial et **en ce que** la trajectoire circulaire des plaquettes de coupe (31, 301, 321) forme pour l'essentiel le contour d'usinage.

6. Outil selon l'une des revendications 1 à 5, **caractérisé en ce qu'**au moins l'une des plaquettes de coupe (3, 30, 32) possède(nt) sur ou dans la zone de la ou des arête(s) de coupe (31, 301, 321) une géométrie superficielle de la face de coupe (34) partiellement concave ou au moins en partie un gradin de guidage des copeaux.

7. Plaquette de coupe destinée à être montée dans des pièces de serrage ou dans des éléments de coupe d'outils destinés à l'usinage de pièces par fraisage circulaire, la plaquette de coupe (3) étant fixée amovible et en débordement dans un évidement d'un corps d'outil (2) et présentant au moins deux faces d'ajustage ou de contact (33, 33'), une face d'appui (34') transmettant principalement les forces de coupe ainsi que des face(s) de dépouille (35) et face de coupe (34) formant la ou les arête(s) de coupe (31), **caractérisée en ce que** la plaquette de coupe (3) est conçue comme une plaquette amovible à utiliser dans des pièces de serrage ou des éléments de coupe qui se succèdent et présente à chaque fois, en vue de dessus perpendiculaire à l'axe, des surfaces de contact (33, 33') formant entre elles un angle α ainsi qu'une face de coupe (34) formant une arête de coupe (31) éventuellement courbe et **en ce que** la face de dépouille possède en vue de côté au moins une forme trapézoïdale avec des arêtes de coupe (31, 31') inclinées l'une en direction de l'autre.

8. Plaquette de coupe selon la revendication 7, **caractérisée en ce qu'**un évidement (4) destiné à recevoir une fixation de la plaquette de coupe (3) traverse ladite plaquette sensiblement perpendiculairement à une face de dépouille (35), de préférence selon la bissectrice de l'angle formé par les faces de coupe (34, 34').

9. Plaquette de coupe selon la revendication 7 ou la revendication 8, **caractérisée en ce que** la face de coupe (34) présente au moins partiellement, dans la zone de l'arête de coupe (31), un creux (36) sensiblement parallèle à ou équidistant de l'arête de coupe et affectant la forme d'un gradin de guidage des copeaux (36).
